# EUROPEAN PATENT SPECIFICATION

(11) **EP 2 224 774 B1**
(45) Date of publication and mention of the grant of the patent: **25.01.2012**
(21) Application number: 09290137.0
(22) Date of filing: 26.02.2009
(51) Int. Cl.: H04W 48/18, H04W 4/02, H04W 36/32

(54) **Method and equipment for managing the connection of a terminal in wireless communication networks**
Verfahren und Gerät zur Verwaltung der Verbindung eines Endgeräts in drahtlosen Kommunikationsnetzwerken
Procédé et équipement pour gérer la connexion d'un terminal dans des réseaux de communication sans fil

(43) Date of publication of application: 01.09.2010
(73) Proprietor: Alcatel Lucent, 75008 Paris (FR)
(72) Inventor: Faye, Jean-Claude, 91190 Gif sur Yvette (FR); Mongazon-Cazavet, Bruno, 91240 Saint Michel-Sur-Orge (FR)
(74) Representative: Croonenbroek, Thomas Jakob

(56) References cited:
- EP-A- 2 007 161
- GB-A- 2 389 005
- US-A- 5 862 480
- US-B1- 6 188 897

## Description

### BACKGROUND OF THE INVENTION

The present invention relates to the field of wireless communication networks and more specifically to the handover process in heterogeneous networks.

Heterogeneous network refers to the possibility for a terminal to be connected to different types of networks using different radio frequency bands. Depending on its location and the available networks, a terminal will be connected to one network or another. When a user is moving with its terminal, the terminal is going through different coverage zones corresponding to different types of networks. Thus, at the boundary of such zone, the terminal has to achieve a handover to switch from one network to the other in order to keep or restore its connection.

Such handover process may require a non-negligible time in order to achieve the different steps of the handover process which may induce, especially in the case of single radio terminal, delays for real-time services.

One way to detect network boundaries is to scan the surroundings in order to detect new networks signalling but such a permanent scanning is very power consuming and reduces the autonomy of the terminal. GB-A-2389005 discloses a terminal monitoring its location to determine with the help of a database the fact that one of wireless LAN access points is nearby so that it may begin a search procedure of (or a handoff to) the nearby WLAN AP.

### SUMMARY OF THE INVENTION

It is therefore an object of the present invention to overcome the above cited drawbacks of the state of the art and provide a method allowing to reduce handover delays and requiring a limited power consumption. The scope of the invention is defined by the appended claims.

Thus, the present invention refers to a method for managing within a global heterogeneous network the transition of a terminal connected to a first wireless communication network having a first coverage zone towards a second wireless communication network having a second coverage zone overlapping at least partially said first coverage zone wherein said method comprises the following steps:
- determining the terminal location;
- determining the networks topology of the surroundings of said terminal;
   if the terminal is in a predetermined area corresponding to the coverage border of said first wireless communication network,
- determining available candidate networks of the surroundings of said terminal and,
- selecting, among said available candidate networks and based on at least one predetermined criterion, said second wireless communication network.

In another embodiment, said the step of determining available candidate networks comprises a scanning of the surroundings in order to detect said available candidate networks.

In an additional embodiment, said at least one predetermined criterion is the radio power level.

In a further embodiment, the terminal is a single radio terminal and wherein it comprises an additional step of pre-attachment to the second wireless communication network.

In an additional embodiment, the networks topology of the surroundings of the terminal is downloaded from a network repository on the terminal.

In a supplementary embodiment, a new download is achieved when the terminal is getting close to or out of the border of the networks topology area covered by the previous download.

In another embodiment, the steps of determining the terminal location and determining the networks topology of the surroundings of the terminal are achieved at the network level by a network process centralized server.

In an additional embodiment, the step of determination of the terminal location is achieved thanks to the access points (AP) and base stations (BS) crossed by the terminal.

In a supplementary embodiment, the step of determination of the terminal location is achieved by a global positioning system (GPS).

The present invention also refers to a single radio terminal comprising:
- a cache memory for saving networks topology data and;
- means for:
   - determining its location;
   - downloading networks topology of the surroundings;
   - determining the available candidate networks;
   - selecting, among said available candidate networks and based on at least one predetermined criterion, one of said available candidate networks;
   - determining the optimal instant for triggering a pre-attachment;
   - requesting to its serving network a pre-attachment to a candidate network;

According to another embodiment, said single radio terminal comprises means for:
- determining the optimal instant for launching a scan of the surroundings;
- scanning the surroundings in order to determine candidate networks features;

Moreover, the present invention refers to a multiple radio terminal comprising:
- a cache memory for saving networks topology data and;
- means for:
   - determining its location;
   - downloading networks topology of the surroundings;
   - determining the available candidate networks;

According to a further embodiment, said multiple radio terminal comprises means for:
- determining the optimal time for launching a scan of the surroundings;
- scanning the surroundings in order to determine candidate networks features;

In addition, the present invention refers to a network process server comprising means for:
- receiving a request of pre-attachment triggering service from a single radio terminal;
- receiving a request of scanning triggering service from a multiple radio terminal;
- checking the connection authorization of the terminal requesting a service;
- determining the location of a terminal;
- determining networks topology in the surroundings of a terminal;
- sending a scanning triggering notification to a terminal;
- sending a pre-attachment triggering notification to a single radio terminal.

### BRIEF DESCRIPTION OF THE DRAWINGS

FIG.1 is a diagram of the organization of a terminal oriented embodiment of the present invention in the case of a single radio terminal;
FIG.2 is a diagram of an example of heterogeneous network comprising two different network structures;
FIG.3 is a diagram of the organization of a network oriented embodiment of the present invention in the case of a single radio terminal;
FIG.4 is a possible network architecture of a network oriented solution according to the present invention in the case of a single radio terminal;

### DETAILED DESCRIPTION OF THE INVENTION

As used herein, the term "single radio terminal" refers to a terminal being able to be connected to only one radio frequency band at a time;

As used herein, the term "multiple radio terminal" refers to a terminal being able to be connected to several radio frequency bands at a time;

As used herein, the term "heterogeneous network" refers to a network comprising different types of structure in order to provide radio connection, for example WIMAX and LTE structures;

As used herein, the term "MIIS" refers to the acronym Media Independent Information Service;

As used herein, the term "GPS" refers to the acronym Global Positioning System;

As used herein, the term "LTE" refers to the acronym Long Term Evolution;

As used herein, the term "WIMAX" refers to the acronym Worldwide Interoperability for Microwave Access;

As used herein, the term "HSS" refers to the acronym Home Subscriber Server;

As used herein, the term "AAA" refers to the acronym Authentication, Authorization and Accounting;

As used herein, the term "scanning of the surroundings" refers to a network level scanning which is used to determine the bandwidth frequency of a possible candidate network.

The idea of the present invention is to determine, based on the terminal location and the networks topology, the right instant for launching the procedures preceding and leading to a handover such as a available candidate networks determination or candidate network pre-attachment.

According to the invention, two different approaches are described herein, one is terminal oriented and the other is network oriented. Moreover, two different embodiments are described with respect to two types of terminals, a single radio type and a multiple radio type.
Therefore, the following description will be divided into two parts, a first part related to the single radio type solution and a second part related to the multiple radio type solution.

### Single radio type terminal

The present invention requires the determination of two parameters:
- the location of the terminal and,
- the topology of the networks in the surroundings of the terminal location.

Said terminal location can be determined, for example, thanks to the access points and base stations to which the terminal is connected to while moving within a network coverage zone or thanks to a global positioning system (GPS). Nevertheless, any other adapted method can be performed for said location determination.
Concerning the topology of the surroundings of the terminal, such topology can be downloaded from a network data repository and saved in a dedicated cache memory of the terminal. Such network data repository can be a Media independent Information Service (MIIS) which provides networks cells positioning. Moreover, the size of the area covered by the downloaded topology data file will depend on the terminal cache memory capacity. Thus, when the terminal gets close to the border of the area covered by the network topology file located in the terminal memory, a new downloading of the network topology corresponding to the new terminal location is requested from the MIIS.
Knowing its location and the topology of the networks in its surroundings, the terminal can therefore determine the optimal instant for launching a scan of the surroundings and a pre-attachment to a candidate network. Such instant corresponds to the instant when the terminal gets close to the border of the area or zone covered by the network to which the terminal is connected.
In the case of a single radio terminal, a pre-attachment is required before achieving the handover from one network type to the other.

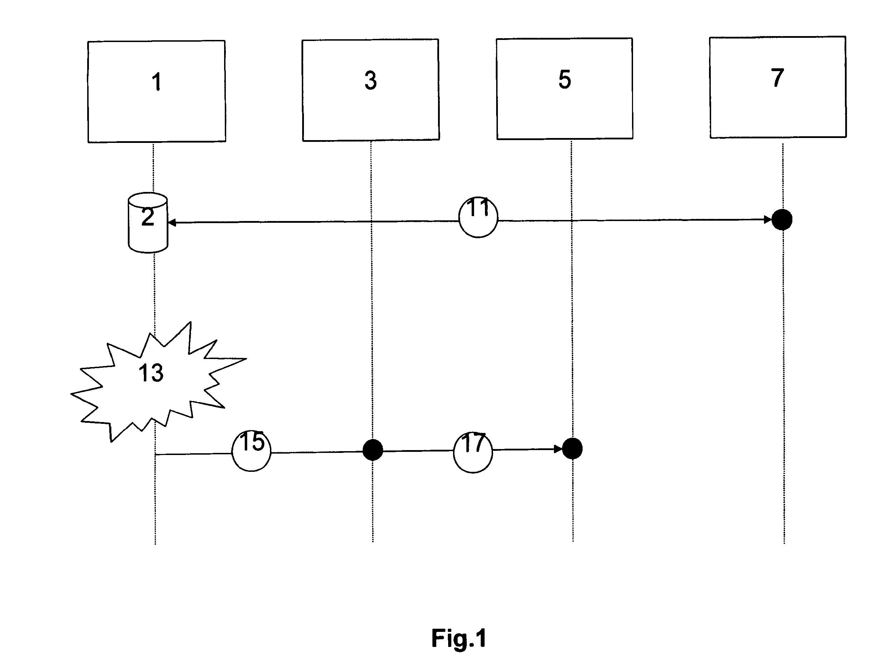

Fig.1 represents the mechanisms previously described between the different entities of the networks: a terminal or mobile node 1, a serving network 3, a candidate network 5 and a MIIS 7. The terminal 1 requests networks topology information to the MIIS 7 and downloads the corresponding file in its cache memory 2 (arrow 11).
Then, the terminal 1 is able to determine the networks possibilities in its surroundings. Thus, when the terminal is getting close to a network coverage border, a pre-attachment process 13 is triggered in order to determine the features of the available candidate networks and to select one in order to achieve said pre-attachment.

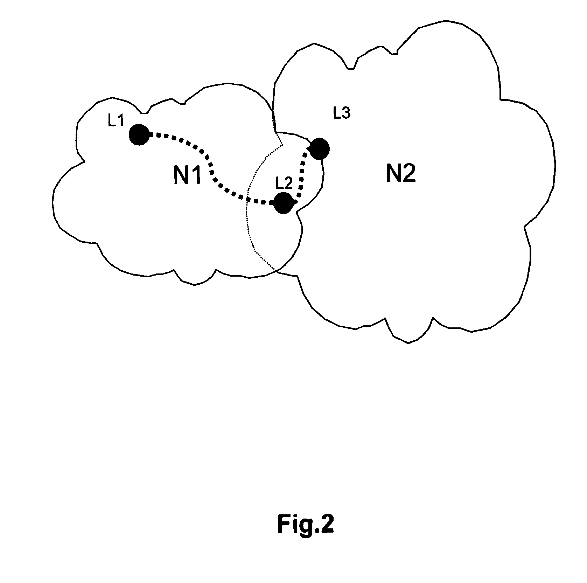

Fig.2 represents an example of network topology comprising two different networks N1 and N2. N1 being a WIMAX network whereas N2 is a LTE network. The terminal is initially positioned at location L1. Then, the user is moving towards N2 according to the trajectory represented by the dotted line. When said user arrives at location L2, its terminal has determined that the coverage border of N1 is approaching and therefore launches a pre-attachment process 13. During said process 13, the terminal 1 looks at its cache memory 2 in order to determine the candidate network 5. If the information concerning the bandwidth frequency of the candidate network 5 is not available in the cache memory 2, a scanning of the surroundings is achieved in order to determine said bandwidth frequency.
Then, the terminal, after having optionally checked that the level of emission power provided by the candidate network 5 matches the expected connection quality, sends a pre-attachment request to the serving network 3 (arrow 15) that, in turn, forwards the request to the candidate network 5 (arrow 17).
In the example of Fig.2, the serving network is N1 and the candidate network is N2. Thus, when the user arrives at location L3 which is the border of the coverage zone of network N1, the pre-attachment to network N2 has already been achieved and the handover processing time required to switch from one network to the other is reduced which decreases the risk of delay in real-time service applications.

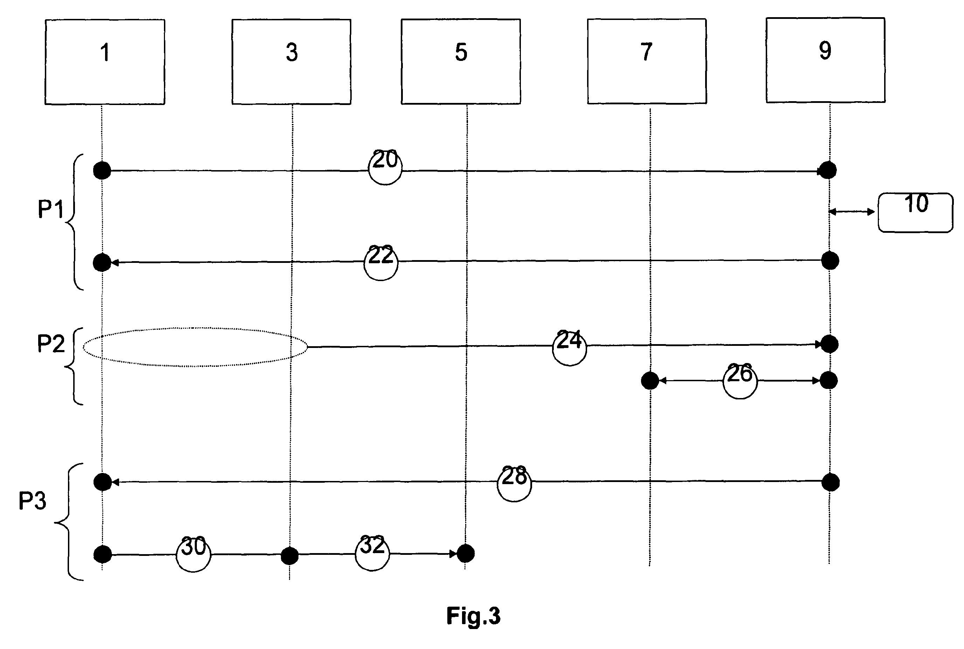

In a second embodiment, corresponding to a network oriented solution, the terminal location monitoring and the networks topology analysis are achieved at the network level instead of being achieved by the terminal. Such process is represented in Fig.3 and can be divided into three phases.
The first phase P1 corresponds to a service request phase. The terminal 1 sends a request 20 to a network process unit 9, said request comprising, for example, the subscriber identity and the involved networks, that is to say, the networks to which the terminal user has subscribed to (possible candidate networks).
Said network process unit 9 corresponds to the additional equipment required for the present embodiment with respect to classical networks.
At reception of the request 20, the network process unit 9 asks the HSS/AAA server 10 the authorization status for the terminal 1 with respect to the candidate networks 5.
The network process unit 9 sends back a service acceptance/refusal notification 22 to the terminal 1. Said notification comprising the accepted networks.

The second phase P2 corresponds to the network processing.
The network process unit 9 receives information about the terminal 1 location (arrow 24). Having terminal 1 location details, the network process unit communicates with the MIIS server 7 (arrow 26) in order to get the network topology in the surroundings of the terminal.
Then, data processing to determine a need for scanning and/or pre-attachment is achieved in the network process unit 9.
This phase P2 is achieved periodically which allows the network process unit 9 to track the terminal 1 position and the candidate networks in order to trigger pre-attachment or handover at the convenient time on behalf of the terminal 1.
The third phase P3 refers to the pre-attachment triggering.
When the network process unit 9 determines that the terminal is in an area close to the border of the serving network coverage zone, a triggering notification comprising the authorized candidate network(s) is sent to the terminal (arrow 28).
Then, as in the terminal oriented embodiment, the terminal 1, after having optionally checked that the level of emission power provided by the candidate network 5 matches the expected connection quality, sends a pre-attachment request 30 to the serving network 3, said request being forwarded to the candidate network (arrow 32).

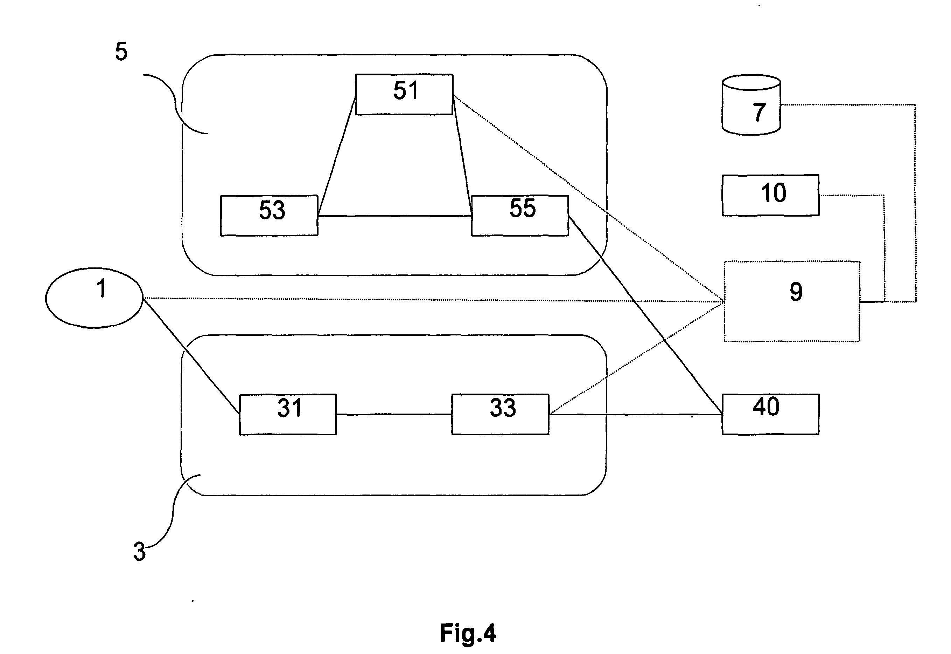

Fig.4 represents a possible architecture of the network according to this second embodiment wherein the dotted lines represent the additional equipments and connections necessary for the present invention.
The terminal 1 is connected to the serving network 3 through a base station 31 and an Access Service Network GateWay (ASN-GW) 33 which is itself connected to a Packet Data Network GateWay/ Home Agent (PDN GW/HA) 40.
For requesting pre-attachment, the terminal 1 sends a request to the centralized network process unit 9. Said network process unit 9 is connected to the MIIS 7 and the HSS/AAA server 10. Thus, the network process unit 9 can achieve the pre-attachment determination. Moreover, said network process unit 9 is connected to the ASN-GW 33 of the serving network 3 and to the Mobility Management Entity (MME) 51 of the candidate network 5. Said MME 51 managing the eNode Bs 53 and the serving gateway 55. Thus the network process unit 9 may also achieved the handover from the serving network 3 to the candidate network 5.

### Multiple radio type terminal

In the case of multiple radio type terminal, no pre-attachment is necessary, nevertheless the terminal needs to detect the available networks in its surroundings in order to achieve the connection to these available networks.

In the same way as for the single radio configuration, the terminal location and the topology of the networks in the surroundings are determined either at the terminal level or at the network level. The difference is that no pre-attachment process are triggered but only a scanning of the surroundings in order to detect the available candidate networks and/or to achieve the radio power level assessment of said network candidates. Thus, the scanning of the surroundings is achieved only when the terminal gets close to the border of the coverage zone of the serving network or when the terminal enters the coverage zone of a new candidate network.

Thus, the present invention allows to reduce the pre-attachment delays in the case of single radio terminals and to reduce the power consumption in any cases by reducing the scanning time. Moreover, the present invention can work without impacting the functioning of present access networks.

## Claims

1. Method for managing within a global heterogeneous network the transition of a terminal (1) connected to a first wireless communication network (3) having a first coverage zone towards a second wireless communication network (5) having a second coverage zone overlapping at least partially said first coverage zone wherein said method comprises the following steps:
- determining the terminal (1) location;
- determining the networks topology of the surroundings of said terminal (1);
if the terminal (1) is in a predetermined area corresponding to the coverage border of said first wireless communication network (3),
- determining the instant for triggering a pre-attachment process or a scanning of the surroundings of said terminal (1),
- determining available candidate networks (5) of the surroundings of said terminal (1),
- selecting, among said available candidate networks and based on at least one predetermined criterion, said second wireless communication network (5) and,
- requesting to the first wireless communication network (3) a pre-attachment or a handover to said selected second wireless communication network (5) **characterized in that** in the step of determining the instant for triggering a pre-attachment process or a scanning of the surroundings of said terminal, the time to achieve selection among candidate networks is taken into account.

2. Method for managing the connection of a terminal (1) in accordance with claim 1 wherein the step of determining available candidate networks comprises a scanning of the surroundings in order to detect said available candidate networks.

3. Method for managing the connection of a terminal (1) in accordance with claim 1 or 2 wherein said at least one predetermined criterion is the radio power level.

4. Method for managing the connection of a terminal 1 in accordance with one of the previous claims wherein the terminal (1) is a single radio terminal and wherein it comprises an additional step of pre-attachment to the second wireless communication network (5).

5. Method for managing the connection of a terminal (1) in accordance with one of the previous claims wherein the networks topology of the surroundings of the terminal (1) is downloaded from a network repository (10) on the terminal (1).

6. Method for managing the connection of a terminal (1) in accordance with claim 5 wherein a new download is achieved when the terminal (1) is getting close to or out of the border of the networks topology area covered by the previous download.

7. Method for managing the connection of a terminal (1) in accordance with one of the claims 1 to 4 wherein the steps of determining the terminal (1) location and determining the networks topology of the surroundings of the terminal are achieved at the network level by a network process centralized server (9).

8. Method for managing the connection of a terminal (1) in accordance with one of the previous claims wherein the step of determination of the terminal (1) location is achieved thanks to the access points (AP) and base stations (BS) crossed by the terminal (1).

9. Method for managing the connection of a terminal (1) in accordance with one of the claims from 1 to 7 wherein the step of determination of the terminal (1) location is achieved by a global positioning system (GPS).

10. Single radio terminal connected to a first wireless network having a first coverage zone wherein it comprises:
- a cache memory (2) for saving networks topology data and;
- means for:
- determining its location;
- downloading networks topology of the surroundings;
- determining the available candidate networks having a second coverage overlapping at least partially the first coverage zone if said single radio terminal is in a predetermined area corresponding to the coverage border of the first wireless network;
- selecting, among said available candidate networks and based on at least one predetermined criterion, one of said available candidate networks;
- determining the instant for triggering a pre-attachment taking into account the time required to achieve selection among candidate networks;
- requesting to its serving network a pre-attachment to a candidate network.

11. Single radio terminal in accordance with claim 10 wherein it comprises means for:
- determining the optimal instant for launching a scan of the surroundings;
- scanning the surroundings in order to determine candidate networks features.

12. Multiple radio terminal connected to a first wireless network having a first coverage zone wherein it comprises:
- a cache memory (2) for saving networks topology data and;
- means for:
- determining its location;
- downloading networks topology of the surroundings;
- determining the instant for triggering a scanning of the surroundings of said multiple radio terminal taking into account the time required to achieve selection among candidate networks,
- determining the available candidate networks having a second coverage overlapping at least partially the first coverage zone if said multiple radio terminal is in a predetermined area corresponding to the coverage border of the first wireless network,
- selecting, among said available candidate networks and based on at least one predetermined criterion, one of said available candidate networks;
- requesting to its serving network a handover to a candidate network.

13. Multiple radio terminal in accordance with claim 12 wherein it comprises means for:
- determining the optimal time for launching a scan of the surroundings;
- scanning the surroundings in order to determine candidate networks features.

14. Network process server (9) wherein it comprises means for:
- receiving a request of pre-attachment triggering service from a single radio terminal connected to a first wireless network having a first coverage zone;
- receiving a request of scanning triggering service from a multiple radio terminal connected to a first wireless network having a first coverage zone;
- checking the connection authorization of the terminal requesting a service;
- determining the location of a terminal;
- determining networks topology in the surroundings of a terminal;
- determining the optimal instant for triggering a pre-attachment process taking into account the time to achieve selection among candidate networks;
- determining the optimal instant for triggering a scanning of the surroundings of said terminal (1), taking into account the time to achieve selection among candidate networks;
- determining the available candidate networks having a second coverage overlapping at least partially the first coverage zone,
- sending a scanning triggering notification to a terminal if said terminal is in a predetermined area corresponding to the coverage border of the first wireless network;
- sending a pre-attachment triggering notification to a single radio terminal if said terminal is in a predetermined area corresponding to the coverage border of the first wireless network.

## Patentansprüche

1. Verfahren zur Verwaltung, innerhalb eines heterogenen globalen Netzwerks, des Übergangs eines Endgeräts (1), welches mit einem ersten drahtlosen Kommunikationsnetzwerk (3) mit einem ersten Abdeckungsbereich verbunden ist, zu einem zweiten drahtlosen Kommunikationsnetzwerk (5) mit einem zweiten Abdeckungsbereich, welcher zumindest teilweise den besagten ersten Abdeckungsbereich überlappt, wobei das besagte Verfahren die folgenden Schritte umfasst:
- Ermitteln des Aufenthaltsorts des Endgeräts (1);
- Ermitteln der Netzwerktopologie der Umgebung des besagten Endgeräts (1); wenn sich das Endgerät (1) in einem vorbestimmten Bereich, welcher der Abdeckungsgrenze des besagten ersten drahtlosen Kommunikationsnetzwerks (3) entspricht, befindet,
- Bestimmen des Zeitpunkts für das Auslösen eines Voranschlussvorgangs oder eines Abtastens der Umgebung des besagten Endgeräts (1),
- Ermitteln von verfügbaren Kandidatennetzwerken (5) in der Umgebung des besagten Endgeräts (1),
- Auswählen, unter den besagten verfügbaren Kandidatennetzwerken und auf der Basis mindestens eines vorbestimmten Kriteriums, des besagten zweiten drahtlosen Netzwerks (5), und
- Anfordern, von dem ersten drahtlosen Kommunikationsnetzwerk (3), eines Voranschlusses oder einer Übergabe an das besagte ausgewählte zweite drahtlose Kommunikationsnetzwerk (5),
**dadurch gekennzeichnet, dass** im Schritt des Bestimmens des Zeitpunkts für das Auslösen eines Voranschlussvorgangs oder einer Abtastung der Umgebung des besagten Endgeräts die für die Auswahl unter Kandidatennetzwerken erforderliche Zeit berücksichtigt wird.

2. Verfahren zur Verwaltung der Verbindung eines Endgeräts (1) nach Anspruch 1, wobei der Schritt des Ermittelns von verfügbaren Kandidatennetzwerken ein Abtasten der Umgebung umfasst, um die besagten verfügbaren Kandidatennetzwerke zu erfassen.

3. Verfahren zur Verwaltung der Verbindung eines Endgeräts (1) nach Anspruch 1 oder 2, wobei das besagte mindestens eine vorbestimmte Kriterium der Funkleistungspegel ist.

4. Verfahren zur Verwaltung der Verbindung eines Endgeräts (1) nach einem der vorstehenden Ansprüche, wobei das Endgerät (1) ein Einzelverbindungs-Endgerät ist, und wobei das Verfahren einen zusätzlichen Schritt des Voranschließens an das zweite drahtlose Kommunikationsnetzwerk (5) umfasst.

5. Verfahren zur Verwaltung der Verbindung eines Endgeräts (1) nach einem der vorstehenden Ansprüche, wobei die Netzwerktopologie der Umgebung des Endgeräts (1) von einem Netzwerkarchiv (10) auf dem Endgerät (1) heruntergeladen wird.

6. Verfahren zur Verwaltung der Verbindung eines Endgeräts (1) nach Anspruch 5, wobei ein neues Herunterladen erfolgt, wenn sich das Endgerät (1) dem Rand des Netzwerktopologiebereichs, welcher von dem vorherigen Herunterladen abgedeckt wird, nähert oder sich aus diesem herausbewegt.

7. Verfahren zur Verwaltung der Verbindung eines Endgeräts (1) nach einem der Ansprüche 1 bis 4, wobei die Schritte des Ermittelns des Aufenthaltsorts des Endgeräts (1) und des Ermittelns der Netzwerktopologie der Umgebung des Endgeräts auf Netzwerkebene durch einen zentralisierten Netzwerk-Prozess-Server (9) durchgeführt werden.

8. Verfahren zur Verwaltung der Verbindung eines Endgeräts (1) nach einem der vorstehenden Ansprüche, wobei der Schritt des Ermittelns des Aufenthaltsorts des Endgeräts (1) anhand der Zugangspunkte (AP) und der Basisstationen (BS), welche das Endgerät (1) durchquert, durchgeführt wird.

9. Verfahren zur Verwaltung der Verbindung eines Endgeräts (1) nach einem der Ansprüche 1 bis 7, wobei der Schritt des Ermittelns des Aufenthaltsorts des Endgeräts (1) über ein globales Positionsbestimmungssystem (GPS) durchgeführt wird.

10. Einzelverbindungs-Funkendgerät, welches mit einem drahtlosen Netzwerk mit einem ersten Abdeckungsbereich verbunden ist, wobei es umfasst:
- Einen Cache-Speicher (2) zum Speichern von Netzwerktopologiedaten; und
- Mittel zum:
- Ermitteln seines Aufenthaltsorts;
- Herunterladen der Netzwerktopologie der Umgebung;
- Ermitteln der verfügbaren Kandidatennetzwerke mit einem zweiten Abdeckungsbereich, welcher zumindest teilweise den ersten Abdeckungsbereich überlappt, wenn sich das besagte Einzelverbindungs-Funkendgerät in einem vorbestimmten Bereich, welcher der Abdeckungsgrenze des ersten drahtlosen Netzwerks entspricht, befindet;
- Auswählen, unter den besagten verfügbaren Kandidatennetzwerken und auf der Basis mindestens eines vorbestimmten Kriteriums, eines der besagten verfügbaren Kandidatennetzwerke;
- Bestimmen des Zeitpunkts für das Auslösen eines Voranschlusses unter Berücksichtigung der für die Auswahl unter Kandidatennetzwerken erforderlichen Zeit;
- Anfordern, bei seinem bedienenden Netzwerk, eines Voranschlusses an ein Kandidatennetzwerk.

11. Einzelverbindungs-Funkendgerät nach Anspruch 10, wobei es weiterhin Mittel umfasst zum:
- Bestimmen des optimalen Zeitpunkts für den Start einer Abtastung der Umgebung;
- Abtasten der Umgebung, um charakteristische Merkmale des Kandidatennetzwerks zu ermitteln.

12. Mehrfachverbindungs-Funkendgerät, welches mit einem ersten drahtlosen Netzwerk mit einem ersten Abdeckungsbereich verbunden ist, wobei es umfasst:
- Einen Cache-Speicher (2) zum Speichern von Netzwerktopologiedaten; und
- Mittel zum:
- Ermitteln seines Aufenthaltsorts;
- Herunterladen der Netzwerktopologie der Umgebung;
- Bestimmen des Zeitpunkts für das Auslösen einer Abtastung der Umgebung des besagten Mehrfachverbindungs-Funkendgeräts unter Berücksichtigung der für die Auswahl unter Kandidatennetzwerken erforderlichen Zeit;
- Ermitteln der verfügbaren Kandidatennetzwerke mit einem zweiten Abdeckungsbereich, welcher zumindest teilweise den ersten Abdeckungsbereich überlappt, wenn sich das besagte Mehrfachverbindungs-Funkendgerät in einem vorbestimmten Bereich, welcher der Abdeckungsgrenze des ersten drahtlosen Netzwerks entspricht, befindet;
- Auswählen, unter den besagten verfügbaren Kandidatennetzwerken und auf der Basis mindestens eines vorbestimmten Kriteriums, eines der besagten verfügbaren Kandidatennetzwerke;
- Anfordern, bei seinem bedienenden Netzwerk, eines Voranschlusses an ein Kandidatennetzwerk.

13. Mehrfachverbindungs-Funkendgerät nach Anspruch 12, umfassend Mittel zum:
- Bestimmen des optimalen Zeitpunkts für den Start einer Abtastung der Umgebung;
- Abtasten der Umgebung, um charakteristische Merkmale des Kandidatennetzwerks zu ermitteln.

14. Netzwerk-Prozess-Server (9), umfassend Mittel zum:
- Empfangen einer Anforderung für den Voranschluss-Auslösedienst von einem Einzelverbindungs-Funkendgerät, welches mit einem ersten drahtlosen Netzwerk mit einem ersten Abdeckungsbereich verbunden ist;
- Empfangen einer Anforderung für den Abtastungsauslösedienst von einem Mehrfachverbindungs-Funkendgerät, welches mit einem ersten drahtlosen Netzwerk mit einem ersten Abdeckungsbereich verbunden ist;
- Prüfen der Verbindungsautorisierung des Endgeräts, welches einen Dienst anfordert;
- Ermitteln des Aufenthaltsorts eines Endgeräts;
- Ermitteln der Netzwerktopologie in der Umgebung eines Endgeräts;
- Bestimmen des optimalen Zeitpunkts für das Auslösen eines Voranschlussvorgangs unter Berücksichtigung der für die Auswahl unter Kandidatennetzwerken erforderlichen Zeit;
- Bestimmen des optimalen Zeitpunkts für das Auslösen einer Abtastung der Umgebung des besagten Endgeräts (1) unter Berücksichtigung der für die Auswahl unter Kandidatennetzwerken erforderlichen Zeit;
- Ermitteln der verfügbaren Kandidatennetzwerke mit einem zweiten Abdeckungsbereich, welcher zumindest teilweise den ersten Abdeckungsbereich überlappt;
- Senden einer Abtastungsauslösungsmeldung an ein Endgerät, wenn sich das besagte Endgerät in einem vorbestimmten Bereich, welcher der Abdeckungsgrenze des ersten drahtlosen Netzwerks entspricht, befindet;
- Senden einer Voranschlussauslösungsmeldung an ein Einzelverbindungsendgerät, wenn sich das besagte Endgerät in einem vorbestimmten Bereich, welcher der Abdeckungsgrenze des ersten drahtlosen Netzwerks entspricht, befindet.

## Revendications

1. Procédé de gestion dans un réseau mondial hétérogène de la transition d'un terminal (1) connecté à un premier réseau de communication sans fil (3) ayant une première zone de couverture vers un second réseau de communication sans fil (5) ayant une seconde zone de couverture chevauchant au moins en partie ladite première zone de couverture, dans lequel ledit procédé comprend les étapes suivantes :
- détermination de l'emplacement du terminal (1) ;
- détermination de la topologie de réseau du voisinage dudit terminal (1) ; si le terminal (1) se trouve dans une zone prédéterminée correspondant à la limite de couverture dudit premier réseau de communication sans fil (3),
- détermination de l'instant de déclenchement d'un processus de pré-rattachement ou d'un balayage du voisinage dudit terminal (1),
- détermination de réseaux candidats disponibles (5) dans le voisinage dudit terminal (1),
- sélection, parmi lesdits réseaux candidats disponibles et sur la base d'au moins un critère prédéterminé, dudit second réseau de communication sans fil (5), et
- requête auprès du premier réseau de communication sans fil (3) d'un pré-rattachement ou d'un transfert audit second réseau de communication sans fil sélectionné (5), **caractérisé en ce que** lors de l'étape de détermination de l'instant de déclenchement d'un processus de pré-rattachement ou d'un balayage du voisinage dudit terminal, le temps nécessaire pour obtenir la sélection parmi les réseaux candidats est pris en compte.

2. Procédé de gestion de la connexion d'un terminal (1) selon la revendication 1, dans lequel l'étape de détermination de réseaux candidats disponibles comprend un balayage du voisinage afin de détecter lesdits réseaux candidats disponibles.

3. Procédé de gestion de la connexion d'un terminal (1) selon la revendication 1 ou 2, dans lequel ledit au moins un critère prédéterminé est le niveau de puissance radio.

4. Procédé de gestion de la connexion d'un terminal (1) selon l'une des revendications précédentes, dans lequel le terminal (1) est un terminal radioélectrique unique et comprenant une étape supplémentaire de pré-rattachement au second réseau de communication sans fil (5).

5. Procédé de gestion de la connexion d'un terminal (1) selon l'une des revendications précédentes, dans lequel la topologie de réseau du voisinage du terminal (1) est téléchargée depuis un référentiel de réseau (10) sur le terminal (1).

6. Procédé de gestion de la connexion d'un terminal (1) selon la revendication 5, dans lequel un nouveau téléchargement est effectué lorsque le terminal (1) se rapproche ou sort de la limite de la zone de topologie du réseau couverte par le téléchargement précédent.

7. Procédé de gestion de la connexion d'un terminal (1) selon l'une des revendications 1 à 4, dans lequel les étapes de détermination de l'emplacement du terminal (1) et de détermination de la topologie de réseau du voisinage du terminal sont exécutées au niveau du réseau par un serveur centralisé du réseau (9).

8. Procédé de gestion de la connexion d'un terminal (1) selon l'une des revendications précédentes, dans lequel l'étape de détermination de l'emplacement du terminal (1) est exécutée grâce aux points d'accès (AP) et aux stations de base (BS) croisés par le terminal (1).

9. Procédé de gestion de la connexion d'un terminal (1) selon l'une des revendications 1 à 7, dans lequel l'étape de détermination de l'emplacement du terminal (1) est exécutée par un système de positionnement global (GPS).

10. Terminal radioélectrique unique connecté à un premier réseau sans fil ayant une première zone de couverture, comprenant :
- une mémoire cache (2) pour enregistrer les données de topologie du réseau ; et
- des moyens pour :
- déterminer son emplacement ;
- télécharger la topologie de réseau du voisinage ;
- déterminer les réseaux candidats disponibles ayant une seconde zone de couverture chevauchant au moins en partie la première zone de couverture si ledit terminal radioélectrique unique se trouve dans une zone prédéterminée correspondant à la limite de couverture du premier réseau sans fil ;
- sélectionner, parmi lesdits réseaux candidats disponibles et sur la base d'au moins un critère prédéterminé, l'un desdits réseaux candidats disponibles ;
- déterminer l'instant de déclenchement d'un pré-rattachement en tenant compte du temps nécessaire pour obtenir la sélection parmi les réseaux candidats ;
- demander à son réseau de service un pré-rattachement à un réseau candidat.

11. Terminal radioélectrique unique selon la revendication 10, comprenant des moyens pour :
- déterminer l'instant optimal pour lancer un balayage du voisinage ;
- balayer le voisinage afin de déterminer les caractéristiques des réseaux candidats.

12. Terminaux radioélectriques multiples connectés à un premier réseau sans fil ayant une première zone de couverture, comprenant :
- une mémoire cache (2) pour enregistrer les données de topologie du réseau ; et
- des moyens pour :
- déterminer son emplacement ;
- télécharger la topologie de réseau du voisinage ;
- déterminer l'instant de déclenchement d'un balayage du voisinage desdits terminaux radioélectriques multiples en tenant compte du temps nécessaire pour obtenir la sélection parmi les réseaux candidats ;
- déterminer les réseaux candidats disponibles ayant une seconde zone de couverture chevauchant au moins en partie la première zone de couverture si lesdits terminaux radioélectriques multiples se trouvent dans une zone prédéterminée correspondant à la limite de couverture du premier réseau sans fil ;
- sélectionner, parmi lesdits réseaux candidats disponibles et sur la base d'au moins un critère prédéterminé, l'un desdits réseaux candidats disponibles ;
- demander à son réseau de service un transfert à un réseau candidat.

13. Terminaux radioélectriques multiples selon la revendication 12, comprenant des moyens pour :
- déterminer le moment optimal pour lancer un balayage du voisinage ;
- balayer le voisinage afin de déterminer les caractéristiques des réseaux candidats.

14. Serveur de réseau (9), comprenant des moyens pour :
- recevoir une requête de service de déclenchement de pré-rattachement depuis un terminal radioélectrique unique connecté à un premier réseau sans fil ayant une première zone de couverture ;
- recevoir une requête de service de balayage depuis des terminaux radioélectriques multiples connectés à un premier réseau sans fil ayant une première zone de couverture ;
- vérifier l'autorisation de connexion du terminal demandant un service ;
- déterminer l'emplacement d'un terminal ;
- déterminer la topologie de réseau du voisinage d'un terminal ;
- déterminer l'instant optimal de déclenchement d'un processus de pré-rattachement en tenant compte du temps nécessaire pour obtenir la sélection parmi les réseaux candidats ;
- déterminer l'instant optimal de déclenchement d'un balayage du voisinage dudit terminal (1) en tenant compte du temps nécessaire pour obtenir la sélection parmi les réseaux candidats ;
- déterminer les réseaux candidats disponibles ayant une seconde zone de couverture chevauchant au moins en partie la première zone de couverture ;
- envoyer une notification de déclenchement de balayage à un terminal si ledit terminal se trouve dans une zone prédéterminée correspondant à la limite de couverture du premier réseau sans fil ;
- envoyer une notification de déclenchement de pré-rattachement à un terminal radioélectrique unique si ledit terminal se trouve dans une zone prédéterminée correspondant à la limite de couverture du premier réseau sans fil.
